# EUROPEAN PATENT APPLICATION

(11) **EP 4 375 315 A1**
(43) Date of publication of application: **29.05.2024**
(21) Application number: 22209201.7
(22) Date of filing: 23.11.2022
(51) Int. Cl.: C08J 5/04, C08L 1/08, C08L 23/06

(54) **NATURAL FIBER POLYMER COMPOSITE PRECURSOR PELLETS**

(71) Applicant: SAPPI Netherlands Services B.V., 6211 AA Maastricht (NL)
(72) Inventor: BALLET, Wim, 3770 Riemst (BE); ALEXANDRE, Michaël, 4102 Ougrée (BE)
(74) Representative: Schmitz, Joseph

(57) **Abstract**

A natural fiber polymer composite precursor pellet comprising, a thermoplastic polymer coupling agent as a binder and a natural fiber, wherein the natural fiber is a bleached chemical pulp and is comprised in an amount of at least 88 weight %, and wherein the thermoplastic polymer coupling agent is comprised in an amount of between 8 and 12 weight %, preferably between 9 and 11 weight %, based on the weight of the pellet.

## Description

### TECHNICAL FIELD

The present invention relates to natural fiber polymer composite precursor pellets and methods of their manufacture.

### PRIOR ART

A fiber reinforced polymer composite is generally a polymer in which reinforcing fibers are dispersed throughout the bulk of the polymer. The reinforcing fibers that have been used traditionally were synthetic fibers, such as rayon or glass fiber. However, in recent developments, these synthetic fibers have been replaced by wood fibers that are considered to be less environmentally problematic.

When dispersing such wood fibers in a matrix of polymer, one of the main problems is that bulk wood fibers are lightweight and fluffy, and their incorporation into a melt of polymer can be difficult because they are hard to convey and feed into the polymer via traditional feeding systems such as hoppers or screws. While wood fibers can be compacted to pellets to enhance their ability to be conveyed and fed, another problem arises, which is that of sufficiently disintegrating and dispersing the compacted pellets in the mixing device such as a twin screw extruder.

Therefore, masterbatch-type pellets with a high wood fiber content and low polymer content have been proposed. Such masterbatch-type pellets can be easily conveyed and fed into a mixing device and also can be easily disintegrated and dispersed in the mixing device.

Such masterbatch-type pellets are generally manufactured at a central location and transported to a given site of use, where they are stored until used. Therefore, such pellets must be able to withstand the static pressure that occurs in storage silos and at the same time withstand any erosion occurring during transport.

Therefore, there exists a need for providing a masterbatch-type pellet having good static pressure resistance and erosion resistance, while at the same time being easy to disintegrate and disperse in a mixing device.

In general, the static pressure that pellets experience in storage silos can be best dealt with by providing a hard pellet, which hardness can be quantified by a shore A hardness above a given threshold. If a pellet has a required hardness, it is generally considered as reliably suitable for storage in silos. However, erosion, being the consequence of dynamic forces during transport, is a more complex phenomenon and the suitability of pellet materials harder to predict. For instance, a high hardness of a pellet is not a reliable predictor for its propensity to erode during transport.

WO2020254713A1 discloses natural fiber plastic composite precursor materials, which may be in pellet form, which materials comprise 80 to 95% (w/w) cellulosic fibers having an average fiber length less than 1 mm, and 3 to 7% (w/w) coupling agent, and optionally a thermoplastic polymer and/or a lubricant, a wax, or both. It defines suitable pellet hardness, on page 4, i.e. not too soft and not too hard, in the range of 100-200 N, such as 120-180 N. Pellets which are too hard do not break properly during the mixing and extrusion process and resulting pellet fragments show up as little bumps in the finished product and significantly decrease its mechanical properties. Pellets which are too soft on the other hand causes powder formation and thus challenges during feeding of the material or transportation. The natural fiber plastic composite precursor materials may be formed into pellets having an average diameter in the range of 3-8 mm, such as 3-6 mm. It was also found out that pellets having an average diameter less than 3 mm were not desired, because they were prone to break or crumble during handling and/or transport.

WO2019110868A1 discloses a pulp precursor material for compounding with a polymer, the pulp precursor material comprising a dried bleached chemical pulp containing cellulose fibres, an adsorption agent on the surface of the cellulose fibres and less than 12 wt% of thermoplastic polymer compatibilizer which has been mixed with the dried bleached chemical pulp, wherein the pulp content of the pulp precursor material is equal to or higher than 80 wt.% of the pulp precursor material and the moisture content of the pulp precursor material is less than 10 wt.%. However, the use of adsorption agents is cost-intensive and constitutes one more parameter of the manufacturing process that must be controlled.

WO2017165957A1 discloses cellulosic composites including wood pulp incorporated into a polymeric matrix, where the wood pulp is a mechanical pulp comprising lignin in an amount of about 5% to 35% of the dry weight of the mechanical pulp.

### SUMMARY OF THE INVENTION

The present invention provides a master-batch type pellet comprising a high content natural fiber that exhibits good stability and can be easily dispersed in additional polymer and yield good mechanical properties.

It is a first object of the present invention to provide a natural fiber polymer composite precursor pellet comprising a thermoplastic polymer coupling agent as a binder and a natural fiber, wherein the natural fiber is a bleached chemical pulp and is comprised in an amount of at least 88 weight %, and wherein the thermoplastic polymer coupling agent is comprised in an amount of between 8 and 12 weight %, and preferably between 9 and 11 weight %, based on the weight of the pellet.

It is a second object of the present invention to provide a method of producing a natural fiber polymer composite precursor pellet, comprising the steps of
a) combining a natural fiber, in an amount of at least 88 weight %, with a thermoplastic polymer coupling agent, in an amount of between 8 and 12 weight %, based on the weight of the natural fiber polymer composite precursor pellet, in thermokinetic mixer such as a hot/cold mixer to form a natural fiber polymer composite precursor, wherein the thermoplastic polymer coupling agent forms the binder and, wherein the natural fiber is a bleached chemical pulp, and
b) compacting the natural fiber polymer composite precursor pellet in a non-molten state in a pellet mill to form a natural fiber polymer composite precursor pellet.

It is a third object of the present invention to provide a method of producing a natural fiber polymer composite, comprising the steps of combining the natural fiber polymer composite precursor pellet with an amount of a thermoplastic polymer, such as a polyolefin, in a twin screw extruder (TSE) having a L/D ratio of more than 32:1 at a temperature of less than 200°C and preferably of less than 180°C, to form a natural fiber polymer composite melt and solidifying said natural fiber polymer composite melt to obtain a natural fiber polymer composite.

It is an fourth object of the present invention to provide a natural fiber polymer composite, obtained according to the method of producing a natural fiber polymer composite of the third object, in particular where the natural fiber polymer composite is in the form of an automotive interior part such as an instrument panel, a door panel, a ceiling panel, a glove box, or a control button.

### DESCRIPTION OF PREFERRED EMBODIMENTS

It is an object of the present invention to provide a natural fiber polymer composite precursor pellet comprising a thermoplastic polymer coupling agent as a binder and a natural fiber, wherein the natural fiber is a bleached chemical pulp and is comprised in an amount of at least 88 weight %, and wherein the thermoplastic polymer coupling agent is comprised in an amount of between 8 and 12 weight %, and preferably between 9 and 11 weight %, based on the weight of the pellet.

In one embodiment of the natural fiber polymer composite precursor pellet of the present invention, the natural fiber polymer composite precursor pellet consists of a thermoplastic polymer coupling agent as a binder and a natural fiber, wherein the natural fiber is a bleached chemical pulp and is comprised in an amount of at least 88 weight %, and wherein the thermoplastic polymer coupling agent is comprised in an amount of between 8 and 12 weight %, and preferably between 9 and 11 weight %, based on the weight of the pellet. Because in that case, the natural fiber polymer composite precursor pellet of the present invention consists solely of bleached chemical pulp and thermoplastic polymer coupling agent, other components like for example waxes or lubricants are not present.

This allows to obtain a natural fiber polymer composite based on the natural fiber polymer composite precursor pellet of the present invention that can be used in automobile manufacturing, in particular in interior panels, because they do not lead to fogging. Fogging refers to depositions on the inner side of the windscreen or other windows in a car, which are caused by the VOC emissions emanating from polymer parts in the car interior that evaporate and condense on the window surfaces. Waxes and lubricants are known to lead to fogging. Further, not including components other than the bleached chemical pulp and the thermoplastic polymer coupling agent allows to obtain a natural fiber polymer composite based on the natural fiber polymer composite precursor that has no odour, as no odorous components are released from either thermoplastic polymer coupling agent or bleached chemical pulp. In addition, the use of bleached chemical pulp further reduces the development of odour and/or discoloration due to the removal of lignin via chemical pulping and bleaching. The above advantages of the natural fiber polymer composite precursor pellet allow obtaining a natural fiber polymer composite that can be used without having to worry about odour, colour, transport or dispersion.

In one embodiment of the natural fiber polymer composite precursor pellet of the present invention, the natural fiber polymer composite precursor pellet may be a pellet having a spherical, cylindrical or lenticular shape, and preferably has a cylindrical shape. The pellets of the present invention can easily metered into a mixing device such as a twin screw extruder via a suitable feeder device such as for example a gravimetric hopper. The pellets of the present invention may have a diameter of between 2 and 6 mm.

In one embodiment of the natural fiber polymer composite precursor pellet of the present invention, the natural fiber polymer composite precursor pellet having a cylindrical shape may have a length of between 5 and 20 mm, preferably between 5 and 10 mm, and/or may have a diameter of between 2 and 6 mm, and preferably of between 3 and 4 mm, such as for example 3 mm. When the cylindrical shape has the aforementioned dimensions, the pellet may exhibit several advantageous properties, such as excellent resistance against erosion during transport and excellent dispersion when incorporated into further polymer during the production of a natural fiber polymer composite.

In one embodiment of the natural fiber polymer composite precursor pellet of the present invention, the natural fiber polymer composite precursor pellet having a spherical or lenticular shape may have a diameter of between 2 and 6 mm.

In one embodiment of the natural fiber polymer composite precursor pellet of the present invention, the natural fiber polymer composite precursor pellet may be obtained by passing a natural fiber polymer composite precursor in a pelletizing device such as pellet mill equipped with a flat die or a ring die, and preferably in a pellet mill equipped with a flat die. For instance, a ring pelletizer may provide pellets having a cylindrical shape and a diameter of 3, 4, or 6 mm and a flat die pelletizer may provide pellets having a cylindrical shape and a diameter of 3 or 4 mm. It is noted that the natural fiber polymer composite precursor has the same composition of the natural fiber polymer composite precursor pellets. It has been observed that pellets of cylindrical shape and a diameter of 3 or 4 mm, especially when obtained on a flat die pellet mill lead to easy dispersion when producing a natural fiber polymer composite.

In one embodiment of the natural fiber polymer composite precursor pellet of the present invention, the natural fiber polymer composite precursor pellet comprises a thermoplastic polymer coupling agent as a binder and a natural fiber. Even though the thermoplastic polymer coupling agent, at least in terms of weight, forms the smaller part of the natural fibre polymer composite precursor pellet, it effectively forms a binding component in which the natural fiber is bound.

In the natural fiber polymer composite precursor pellet of the present invention, the natural fiber polymer composite precursor pellet of the present invention comprises a natural fiber, which is a bleached chemical pulp, and which is comprised in an amount of at least 88 weight %, or in an amount of between 88 and 92 weight %, based on the weight of the natural fiber polymer composite precursor pellet. In one embodiment of the natural fiber polymer composite precursor pellet of the present invention, the natural fiber, which is a bleached chemical pulp, is comprised between 88 and 90 weight % or between 89 and 91 weight %. It has been found that when the content of the bleached chemical pulp within the natural fiber polymer composite precursor pellet is within the above ranges, the amount of bleached chemical pulp can be maximized without compromising on the resistance against erosion during transport and the quality of dispersion when incorporated into further polymer during the production of a natural fiber polymer composite. Bleached chemical pulp, when at equilibrium with normal atmospheric humidity, tends to absorb humidity in amounts of up to 8 weight %. Thus, when combining the bleached chemical pulp, the amount of humidity in the bleached chemical pulp is to be measured and taken into account when weighing the bleached chemical pulp such that in the natural fiber polymer composite precursor pellet, the final amount of bleached chemical pulp corresponds to the intended amount within the natural fiber polymer composite precursor pellet.

Suitable bleached chemical pulp that may be used in the natural fiber polymer composite precursor pellet of the present invention, may be bleached chemical pulp obtained via various chemical pulping processes such as the Kraft process (Kraft pulp), the sulphite process (sulphite pulp) or soda pulping. Thus, the bleached chemical pulp may be a bleached sulphite pulp such as paper pulp or dissolving pulp, a bleached kraft pulp such as Northern bleached softwood or hardwod kraft or Southern bleached softwood or hardwood kraft and the like. Bleaching a chemical pulp removes further lignin to yield a pulp having usually less than 5% and often less than 1% by weight of lignin, based on the weight of the bleached chemical pulp. Thus, in the natural fiber polymer composite precursor pellet of the present invention, the chemical pulp bleached chemical pulp has less than 5%, preferably less than 3% and more preferably less than 2% by weight of lignin, based on the weight of the bleached chemical pulp.

In one embodiment of the natural fiber polymer composite precursor pellet of the present invention, the bleached chemical pulp is a bleached chemical wood pulp, i.e. a pulp sourced from hardwoods and softwoods. It is noted that the wood pulp may be hardwood pulp only, softwood pulp only or a mixture of hardwood and softwood pulp.

In one embodiment of the natural fiber polymer composite precursor pellet of the present invention, the natural fiber, which is bleached chemical pulp, has a length of less than 400 um, preferably of less than 200 um or more preferably of less than 50 um. In a preferred embodiment, the bleached chemical pulp is knife-milled to a length of less than 200 um. When the length of the bleached chemical pulp is less than 400 um, and in particular when the length of the bleached chemical pulp less than 200 um, the tendency to form flocks that cannot be dispersed is significantly reduced in the natural fiber polymer composite precursor pellets. Thus, when the length of the bleached chemical pulp less than 400 um, and in particular when the length of the bleached chemical pulp less than 200 um, it is not necessary to promote dispersion of the bleached chemical pulp using suitable agents, such as for example adsorption agents. It is understood that in the above context, "a natural fiber having a length of less than X um" means a natural fiber in which at least 90% and preferably at least 95% of the fibers have a length of X um or less.
In one embodiment of the natural fiber polymer composite precursor pellet of the present invention, the pellet has a bulk density of more than 600 g/dm³.

In one embodiment of the natural fiber polymer composite precursor pellet of the present invention, the bleached chemical pulp is non-functionalized bleached chemical pulp, i.e. as obtained from the final bleaching process, or "as-is", i.e. without any further chemical functionalization of the bleached chemical pulp or addition of adsorption agents, such as for example silanization. It has been found that functionalizing the bleached chemical pulp, such as for example with aminosilanes, is not necessary in order to obtain a natural fiber polymer composite precursor pellet that is easily dispersed, when incorporated into further polymer during the production of a natural fiber polymer composite.

In the natural fiber polymer composite precursor pellet of the present invention, the natural fiber polymer composite precursor pellet of the present invention comprises a thermoplastic polymer coupling agent, which is comprised in an amount of between 8 and 12 weight %, preferably between 8 and 10 weight % or between 9 and 11 weight %, based on the weight of the based on the weight of the natural fiber polymer composite precursor pellet. It has been found that when the content of the thermoplastic polymer coupling agent within the natural fiber polymer composite precursor pellet is within the above ranges, the amount of thermoplastic polymer coupling agent can be maximized without compromising on the resistance against erosion during transport and the quality of dispersion when incorporated into further polymer during the production of a natural fiber polymer composite.

In one embodiment of the natural fiber polymer composite precursor pellet of the present invention, the thermoplastic polymer coupling agent is a thermoplastic polyolefin grafted with an acid anhydride, preferably a thermoplastic polyolefin grafted with an maleic anhydride such as for example maleic anhydride grafted polypropylene (PP-g-MAH) or maleic anhydride grafted polyethylene (PE-g-MAH) .

In one embodiment of the natural fiber polymer composite precursor pellet of the present invention, the thermoplastic polymer coupling agent has a weight average molecular weight of between 80 000 and 85 000 g/mol, when measured by high temperature gel permeation chromatography in 1,2,4 trichlorobenzene at 140°C, using polystyrene standards for calibration.

In one embodiment of the natural fiber polymer composite precursor pellet of the present invention, the thermoplastic polymer coupling agent has a melt flow index of at least 10 g/ 10 min., preferably between 100 and 150 g/10 min., and more preferably between 105 and 130 g/10 min., when measured according to ASTM D1238 at 190°C using a weight of 1.2 kg.

In one embodiment of the natural fiber polymer composite precursor pellet of the present invention, the thermoplastic polymer coupling agent has a melt flow index of at least 10 g/ 10 min., preferably of between 120 and 200 g/10 min., and more preferably between 140 and 180 g/10 min., when measured according to ASTM D1238 at 190°C using a weight of 2.16 kg.
In one embodiment of the natural fiber polymer composite precursor pellet of the present invention, the natural fiber polymer composite precursor pellet has a Pellet Durability Index (PDI) of more than 80, preferably of between 85 and 95, more preferably of between 90 and 95 as determined on a NHP200 Automated Pellet Durability Tester after 80 s, using 100 g of cylindrical pellets and having a diameter of 4 mm.

In one embodiment of the natural fiber polymer composite precursor pellet of the present invention, the natural fiber polymer composite precursor pellet has a flock test value of between 0 and 5 as determined by the flock test. A flock is in principle visible to the naked eye, and is a non-dispersible aggregate of natural fibre in the natural fiber polymer composite precursor pellet, and it is desirable to keep the number of flocks to a minimum. A flock can however not be discerned in the natural fiber polymer composite precursor pellet because of the overall content of natural fiber in the natural fiber polymer composite precursor pellet, and so it must be determined via an appropriate test. The flock test is designed to determine the amount of aggregates found in the natural fiber polymer composite precursor pellet by diluting natural fiber polymer composite precursor pellet in a thermoplastic polymer such as a thermoplastic polyolefin via melt blending and into test pellets, such that the final concentration of natural fiber in the test pellets is 40 weight percent, based on the weight of the test pellet. A given amount of test pellets, which may have a cylindrical shape and a diameter of 2 to 6 mm such as for example 3 mm or 4 mm, is then introduced into a hot press operating at a temperature that is at least the melting temperature of the thermoplastic polymer and flattened to a roughly circular piece of about 15 mm of diameter. Then, any flocks are determined by visual inspection, without magnification, and the number of flocks is determined, giving the flock test value.

The assumption in the flock test is that flocks that were present in the natural fiber polymer composite precursor pellet of the present invention cannot be dispersed when melt blended with the further thermoplastic polymer, and that therefore any flocks that are detected correspond to flocks in the natural fiber polymer composite precursor pellet of the present invention. It is understood that when the thermoplastic polymer coupling agent is based on a given thermoplastic polymer, the thermoplastic polymer used in the melt blending to obtain the test pellets is the same. For instance, if the thermoplastic polymer coupling agent is maleic anhydride polypropylene, then the thermoplastic polymer for obtaining test pellets is a polypropylene, and if the thermoplastic polymer coupling agent is maleic anhydride polyethylene, then the thermoplastic polymer for obtaining test pellets is a polyethylene. In particular, when the thermoplastic polymer coupling agent and the thermoplastic polymer for dilution are polypropylene or a polyethylene, the thermoplastic polymer preferably has a melt flow index of at least 2, or between 20 and 100 when measured according to ASTM D1238 at 230°C using a weight of 2.16 kg.

It is a further object of the present invention to provide a use of the natural fiber polymer composite precursor pellet according to the above in a method of producing a natural fiber polymer composite, preferably in a method of producing a natural fiber polymer composite according to another object of the present invention.

Such a natural fiber polymer composite may be in the form of an automotive part, in particular an automotive interior part such as an instrument panel, a door panel, a ceiling panel, a glove box, or a control button.

It is an object of the present invention to provide a method of producing a natural fiber polymer composite precursor pellet, comprising the steps of
a) combining a natural fiber, in an amount of at least 88 weight %, with a thermoplastic polymer coupling agent, in an amount of between 8 and 12 weight %, based on the weight of the pellet, in a thermokinetic mixer such as a hot/cold mixer to form an natural fiber polymer composite precursor, wherein the thermoplastic polymer coupling agent forms the binder and the natural fiber is a bleached chemical wood fiber pulp, and
b) compacting the natural fiber polymer composite precursor pellet in a non-molten state in a pellet mill to form a natural fiber polymer composite precursor pellet.

In an embodiment of the method of producing a natural fiber polymer composite precursor pellet, the natural fiber alone, such as the bleached chemical pulp, may be agitated in the thermokinetic mixer, for example a hot/cold mixer, such as to reduce the moisture content of the bleached chemical pulp to a moisture of less than 1 weight %, or less than 0.5 weight % in a separate step, prior to step a), i.e. prior to the contact with the thermoplastic polymer coupling agent.

In an embodiment of the method of producing a natural fiber polymer composite precursor pellet, the pellet may have a length of between 5 and 20 mm or between 5 and 10 mm, and/or a diameter of between 2 and 6 mm. They may preferably have a cylindrical shape.

It is an object of the present invention to provide a method of producing a natural fiber polymer composite, comprising the steps of combining the natural fiber polymer composite precursor pellet with an amount of a thermoplastic polymer, such as a polyolefin, in a twin screw extruder (TSE) having a L/D ratio of more than 32:1 at a temperature of less than 200°C and preferably of less than 180°C, to form a natural fiber polymer composite melt and solidifying said natural fiber polymer composite melt to obtain a natural fiber polymer composite.

In an embodiment of the method of producing a natural fiber polymer composite, the thermoplastic polymer is a polyolefin, in particular a polypropylene, having a melt flow index of at least 2, or between 20 and 100 when measured according to ASTM D1238 at 230°C using a weight of 2.16 kg.

In an embodiment of the method of producing a natural fiber polymer composite, the amount of thermoplastic polymer is chosen so that the amount of natural fiber in the natural fiber polymer composite is between 10 weight % to 60 weight %, preferably between 20 weight % to 40 weight %, based on the weight of the natural fiber polymer composite.

In an embodiment of the method of producing a natural fiber polymer composite, the TSE is equipped with at least one vacuum vent and/or the Specific Mechanical Energy (SME) imparted on the natural fiber polymer composite melt is between 0,15 - 0,20 kW/kg. h.

In an embodiment of the method of producing a natural fiber polymer composite, the natural fiber polymer composite is further formed into an automotive part in a subsequent step, in particular an automotive interior part such as an instrument panel, a door panel, a ceiling panel, a glove box, or a control button.

It is an object of the present invention to provide a natural fiber polymer composite, obtained according to the method of producing a natural fiber polymer composite, in particular where the natural fiber polymer composite is in the form of an automotive interior part such as an instrument panel, a door panel, a ceiling panel, a glove box, or a control button.

## Claims

1. A natural fiber polymer composite precursor pellet comprising a thermoplastic polymer coupling agent as a binder and a natural fiber, wherein the natural fiber is a bleached chemical pulp and is comprised in an amount of at least 88 weight %, and wherein the thermoplastic polymer coupling agent is comprised in an amount of between 8 and 12 weight %, preferably between 9 and 11 weight %, based on the weight of the pellet.

2. The natural fiber polymer composite precursor pellet according to claim 1, wherein the thermoplastic polymer coupling agent has a melt flow index of at least 10 g/10 min., preferably between 100 and 150 g/10 min. when measured according to ASTM D1238 at 190°C using a weight of 1.2 kg or a melt flow index of at least 10 g/ 10 min., preferably of between 120 and 200 g/10 min. when measured according to ASTM D1238 at 190°C using a weight of 2.16 kg.

3. The natural fiber polymer composite precursor pellet according to claim 1 or claim 2, wherein the bleached chemical pulp is bleached chemical wood pulp, and preferably is a non-functionalized bleached chemical pulp.

4. The natural fiber polymer composite precursor pellet according to any preceding claim, wherein the thermoplastic polymer coupling agent is a thermoplastic polyolefin grafted with maleic anhydride, such as for example maleic anhydride grafted polypropylene (PP-g-MAH) or maleic anhydride grafted polyethylene (PE-g-MAH) and/or wherein the natural fiber is bleached sulphite wood fiber pulp or bleached kraft wood fiber pulp.

5. The natural fiber polymer composite precursor pellet according to any preceding claim, wherein the natural fiber polymer composite precursor pellet has a Pellet Durability Index (PDI) of at least 80, preferably of between 85 and 95, more preferably of between 90 and 95, as determined on a NHP200 Automated Pellet Durability Tester after 80 s, using 100 g of cylindrical pellets having a diameter of 4 mm.

6. The natural fiber polymer composite precursor pellet according to any preceding claim, wherein the natural fiber polymer composite precursor pellet has a flock test value of between 0 and 5, preferably of between 0 and 3, as determined by the Flock test.

7. The natural fiber polymer composite precursor pellet according to any preceding claim, wherein the natural fiber is comprised in an amount of between 88 and 92 weight %, and preferably between 89 and 91 weight %, and wherein the thermoplastic polymer coupling agent is comprised in an amount of between 8 and 12 weight %, preferably between 9 and 11 weight %, based on the weight of the natural fiber polymer composite precursor pellet.

8. The natural fiber polymer composite precursor pellet according to any preceding claim, wherein the natural fiber has a length of less than 400 µm, preferably of less than 200 µm or more preferably of less than 50 µm and/or the pellet has a bulk density of more than 600 g/dm³ and/or has a diameter of between 2 to 6 mm.

9. A method of producing a natural fiber polymer composite precursor pellet, preferably a natural fiber polymer composite precursor pellet according to any one of claims 1 to 8, comprising the steps of
a) combining a natural fiber, in an amount of at least 88 weight %, with a thermoplastic polymer coupling agent, in an amount of between 8 and 12 weight %, based on the weight of the pellet, in a thermokinetic mixer such as a hot/cold mixer to form an natural fiber polymer composite precursor, wherein the thermoplastic polymer coupling agent forms the binder and the natural fiber is a bleached chemical wood fiber pulp, and
b) compacting the natural fiber polymer composite precursor in a non-molten state in a pellet mill to form a natural fiber polymer composite precursor pellet, preferably wherein the pellet mill is a flat die pellet mill.

10. A method of producing a natural fiber polymer composite, comprising the steps of combining a natural fiber polymer composite precursor pellet, preferably a natural fiber polymer composite precursor pellet according to any one of claims 1 to 8, with an amount of a thermoplastic polymer, such as a polyolefin, in a twin screw extruder (TSE) having a L/D ratio of more than 32:1 at a temperature of less than 200°C and preferably of less than 180°C, to form a natural fiber polymer composite melt and solidifying said natural fiber polymer composite melt to obtain a natural fiber polymer composite.

11. The method of producing a natural fiber polymer composite according to claim 10, wherein the thermoplastic polymer is a polyolefin, in particular a polypropylene, having a melt flow index of at least 2, or between 20 and 100 when measured according to ASTM D1238 at 230°C using a weight of 2.16 kg.

12. The method of producing a natural fiber polymer composite according to claim 10 or 11, wherein the amount of thermoplastic polymer is chosen so that the amount of natural fiber in the natural fiber polymer composite is between 10 weight % to 60 weight %, preferably between 20 weight % to 40 weight %, based on the weight of the natural fiber polymer composite.

13. The method of producing a natural fiber polymer composite according to claim 11 or 12 or 13, wherein the twin screw extruder is equipped with at least one vacuum vent and/or, the Specific Mechanical Energy (SME) imparted on the natural fiber polymer composite melt is between 0,15 - 0,20 kW/kg·h.

14. A natural fiber polymer composite, obtained according to the method of producing a natural fiber polymer composite according to any one of claims 10 to 13, in particular where the natural fiber polymer composite is in the form of an automotive interior part, such as an instrument panel, a door panel, a ceiling panel, a glove box, or a control button.

15. Use of a natural fiber polymer composite precursor pellet according to any one of claims 1 to 8 in a method of producing a natural fiber polymer composite, preferably in a method according to any one claims 10 to 13, in particular where the natural fiber polymer composite is in the form of an automotive interior part, such as an instrument panel, a door panel, a ceiling panel, a glove box, or a control button.
